# FASCICULE DE BREVET EUROPEEN

(11) **EP 3 154 902 B1**
(45) Date de publication et mention de la délivrance du brevet: **16.05.2018**
(21) Numéro de dépôt: 15732435.1
(22) Date de dépôt: 10.06.2015
(51) Int. Cl.: C01B 32/05, C08G 8/22, H01G 11/32, H01G 11/44, H01G 11/34, H01G 11/24, C01B 32/342, C08G 73/06

(54) **COMPOSITION POLYMERIQUE AQUEUSE GELIFIEE, COMPOSITION CARBONEE PYROLYSEE QUI EN EST ISSUE POUR ELECTRODE DE SUPERCONDENSATEUR ET LEURS PROCEDES DE PREPARATION**
GELIERTE WÄSSRIGE POLYMERZUSAMMENSETZUNG, DARAUS HERGESTELLTE, PYROLYSIERTE KOHLENSÄUREHALTIGE ZUSAMMENSETZUNG FÜR EINE SUPERKONDENSATORELEKTRODE UND VERFAHREN ZUR HERSTELLUNG DAVON
GELLED AQUEOUS POLYMER COMPOSITION, PYROLYSED CARBONATED COMPOSITION PRODUCED THEREFROM FOR A SUPERCAPACITOR ELECTRODE, AND METHODS FOR THE PRODUCTION THEREOF

(30) Priorité: 11.06.2014 FR 1455293
(43) Date de publication de la demande: 19.04.2017
(73) Titulaire: Hutchinson, 75008 Paris (FR)
(72) Inventeur: DORIE, Hugo, F-45200 Montargis (FR); AYME-PERROT, David, F-68330 Huningue (FR); DUFOUR, Bruno, F-77430 Champagne sur Seine (FR); SONNTAG, Philippe, F-77210 Avon (FR)
(74) Mandataire: Cabinet Plasseraud
(86) Numéro de dépôt international: PCT/IB2015/054372
(87) Numéro de publication internationale: WO 2015/189776

(56) Documents cités:
- WO-A1-2014/033124
- WO-A1-2014/060904
- DAN LIU ET AL: "One-pot aqueous route to synthesize highly ordered cubic and hexagonal mesoporous carbons from resorcinol and hexamine", CARBON, ELSEVIER, OXFORD, GB, vol. 50, no. 2, 1 septembre 2011 (2011-09-01), pages 476-487, XP028331069, ISSN: 0008-6223, DOI: 10.1016/J.CARBON.2011.09.002 [extrait le 2011-09-08] cité dans la demande
- DAN LIU ET AL: "Simple hydrothermal synthesis of ordered mesoporous carbons from resorcinol and hexamine", CARBON, ELSEVIER, OXFORD, GB, vol. 49, no. 6, 18 janvier 2011 (2011-01-18), pages 2113-2119, XP028153278, ISSN: 0008-6223, DOI: 10.1016/J.CARBON.2011.01.047 [extrait le 2011-01-23] cité dans la demande
- LENGHAUS K ET AL: "Controlling carbon microporosity: the structure of carbons obtained from different phenolic resin precursors", CARBON, ELSEVIER, OXFORD, GB, vol. 40, no. 5, 1 avril 2002 (2002-04-01), pages 743-749, XP004345130, ISSN: 0008-6223, DOI: 10.1016/S0008-6223(01)00194-4

## Description

La présente invention concerne une composition polymérique aqueuse gélifiée apte à former par séchage puis pyrolyse un carbone poreux monolithique, une composition carbonée pyrolysée obtenue par séchage puis pyrolyse de cette composition gélifiée, une électrode de carbone poreux comprenant cette composition pyro!ysée et des procédés de préparation de ces compositions respectivement gélifiée et pyrolysée. L'invention s'applique notamment à des électrodes de supercondensateurs par exemple adaptés pour équiper des véhicules électriques.

Les supercondensateurs sont des systèmes de stockage d'énergie électrique particulièrement intéressants pour les applications nécessitant de véhiculer de l'énergie électrique à forte puissance. Leur aptitude à des charges et décharges rapides, leur durée de vie accrue par rapport à une batterie à puissance élevée en font des candidats prometteurs pour nombre d'applications. Les supercondensateurs consistent généralement en l'association de deux électrodes poreuses conductrices à haute surface spécifique, immergées dans un électrolyte ionique et séparées par une membrane isolante appelé « séparateur », lequel permet la conductivité ionique et évite le contact électrique entre les électrodes. Chaque électrode est en contact avec un collecteur métallique permettant l'échange du courant électrique avec un système extérieur. Sous l'influence d'une différence de potentiel appliquée entre les deux électrodes, les ions présents au sein de l'électrolyte sont attirés par la surface d'électrode présentant une charge opposée, formant ainsi une double couche électrochimique à l'interface de chaque électrode. L'énergie électrique est ainsi stockée de manière électrostatique par séparation des charges. L'expression de la capacité C d'un supercondensateur est identique à celle d'un condensateur classique, soit :
C = ε.S/e, où ε désigne la permittivité du milieu, S la surface occupée par la double couche, et e l'épaisseur de la double couche.

Les capacités atteignables au sein de supercondensateurs sont beaucoup plus élevées que celles atteintes par des condensateurs classiques, du fait de l'utilisation d'électrodes carbonées à surface spécifique très élevée et de l'extrême finesse de la double couche électrochimique (typiquement de quelques nm d'épaisseur). Ces électrodes carbonées doivent être conductrices afin d'assurer le transport des charges électriques, poreuses afin d'assurer le transport des charges ioniques et la formation de la double couche électrochimique sur une grande surface, et chimiquement inertes pour éviter toute réaction parasite consommatrice d'énergie.

L'énergie stockée E au sein d'un supercondensateur est définie selon l'expression classique des condensateurs, soit:
E = 1/2. C.V², où V est le potentiel du supercondensateur.

La capacité et le potentiel sont donc deux paramètres essentiels qu'il est nécessaire d'optimiser pour favoriser les performances énergétiques. La capacité dépend de la texture poreuse réellement accessible par l'électrolyte, Or, pour des applications dans le transport et notamment pour un véhicule électrique, il est nécessaire de disposer d'une densité d'énergie élevée pour limiter la masse embarquée du supercondensateur, ce qui impose d'avoir une capacité massique élevée, Le potentiel d'un supercondensateur dépend principalement de la nature de l'électrolyte utilisé et notamment de sa stabilité électrochimique, étant précisé qu'il existe deux grandes familles d'électrolytes qui sont les électrolytes organiques et aqueux.

De manière connue, les matériaux carbonés, sous forme de poudre ou de monolithe, se révèlent les mieux adaptés pour de telles applications. En effet, ils présentent une haute surface spécifique (pouvant classiquement varier de 500 à 2000 m²/g) et une porosité capable de former les doubles couches électrochimiques nécessaires au stockage d'énergie.

Le document au nom de la Demanderesse WO-A1-2014/060904 présente un carbone poreux monolithique majoritairement microporeux pour électrode de supercondensateur issu de la pyrolyse d'un gel obtenu par polycondensation d'un polyhydroxybenzène tel que du résorcinol, de formaldéhyde et d'un polyélectrolyte cationique hydrosoluble.

Bien que les carbones poreux obtenus dans ce document donnent entière satisfaction, ils présentent comme inconvénient d'être obtenus à partir d'un précurseur formaldéhyde pouvant poser des problèmes de toxicité du fait qu'il est classé comme produit cancérigène pour l'homme.

L'article « Simple hydrothermal synthesis of ordered mesoporous carbons from resorcinof and hexamine » de Dan Liu et al., Carbon 49 (2011) 2113-2119 enseigne, pour le stockage d'énergie, de préparer en milieu aqueux des gels carbonés et leurs pyrolysats RF-350 et RF-900 sous forme de poudre d'un carbone essentiellement mésoporeux et ordonné (ces pyrolysats sont en effet minoritainement microporeux en volume, voir tableau 1 montrant un taux maximum de volume microporeux de 32 % seulement pour le carbone RF-900, avec un volume poreux élevé qui est supérieur à 0,50 cm³/g et même proche de 1 cm³/g pour RF-900). Ces gels sont préparés à partir de précurseurs résorcinol R et hexaméthylène tétramine (HMT) avec une fraction massique de HMT dans le gel de 1,74 % et en présence d'un copolymère amphiphile « Pluronic F127 » (oxyde d'éthylène/ oxyde de propylène/ oxyde d'éthylène) réagissant avec un agent hydrophobe triméthylbenzène (TMB). On obtient ainsi autour de l'agent hydrophobe des micelles formées du copolymère amphiphile et conduisant à la structure mésoporeuse recherchée, dont la taille des pores est définie par les micelles,

L'article "One-pot aqueous route to synthesize highly ordered cubic and hexagonal mesoporous carbons from resorcinol and hexamine" de Dan Liu et al., Carbon 50 (2012) 476-487 présente un procédé similaire en milieu aqueux pour obtenir des gels et leurs pyrolysats RF-1 et RF-2 sous forme de poudre d'un carbone majoritairement mésoporeux en volume, au moyen des mêmes précurseurs R et HMT (avec une fraction massique de HMT dans le gel de l'ordre de 1,20 %) et des mêmes additifs « Pluronic F127 » et TMB. à une température de mélangeage de 80° C.

Les procédés présentés dans ces articles présentent notamment comme inconvénients majeurs de requérir une grande quantité de copolymère amphiphile qui est coûteux, et de conduire à des carbones majoritairement mésoporeux en volume, ce qui pénalise la capacité des électrodes de supercondensateurs à base de ces carbones poreux.

Le document WO 2014/033124 A1 divulgue des monolithes poreux cellulaires qui sont à base de tannins condensés (polymères de flavonoïdes) et qui présentent des surfaces spécifiques au maximum de 17 m²/g et des volumes poreux supérieurs à 3 cm³/g, étant inutilisables dans des électrodes de supercondensateurs.

Un but de la présente invention est de proposer une composition polymérique aqueuse gélifiée apte à former par séchage puis pyrolyse un carbone poreux monolithique, la composition comprenant le produit d'une réaction de polycondensation dans un solvant aqueux W de monomère(s) polyhydroxybenzène(s) R choisis parmi les di- et tri-hydroxybenzènes et d'hexaméthylène tétramine H selon une fraction massique H/ (R+H+W) utilisée pour ladite réaction, qui remédie à ces inconvénients en présentant en outre une surface spécifique microporeuse très élevée alliée à un faible volume poreux.

Ce but est atteint en ce que la Demanderesse vient de découvrir d'une manière surprenante qu'une polycondensation dans un solvant aqueux W de ces précurseurs R et H avec une fraction massique de H allant de 7 % à 15 % environ, permet d'obtenir un polycondensat qui forme un gel chimique irréversible après gélification et, après séchage puis pyrolyse, forme un carbone poreux avantageusement monolithique et très majoritairement microporeux, i.e. avec une surface spécifique microporeuse à au moins 80 % et un volume poreux qui est inférieur à 0,50 cm³/g et qui est microporeux à au moins 70 %.

Une composition polymérique aqueuse gélifiée selon l'invention est ainsi telle que ladite fraction massique H/ (R+H+W) est inclusivement comprise entre 7 % et 15 %.

Par « composition gélifiée » ou « gel », on entend de manière connue le mélange d'une matière colloïdale et d'un liquide, qui se forme spontanément ou sous l'action d'un catalyseur par la floculation et la coagulation d'une solution colloïdale. Rappelons que l'on distingue les gels chimiques et les gels physiques, les gels chimiques devant leur structure à une réaction chimique et étant par définition irréversibles, comme cela est le cas dans la présente invention, alors que pour les gels physiques l'agrégation entre les chaînes macromoléculaires est réversible.

On notera que cette utilisation de l'hexaméthylène tétramine (donneur de méthylène de type polyalcène polyamine également appelé hexamine, méthénamine ou HMT dans la littérature) présente l'avantage d'une synthèse des gels irréversibles selon l'invention mise en oeuvre sans produit toxique, tel que le formaldéhyde qui est cancérigène pour l'homme.

De préférence, ladite fraction massique H/ (R+H+W) est inclusivement comprise entre 10 % et 14 % pour ladite réaction.

Selon une autre caractéristique de l'invention, le(s) monomère(s) polyhydroxybenzène(s) R et l'hexaméthylène tétramine H sont utilisés pour ladite réaction selon un rapport molaire R/H inclusivement compris entre 2 et 4, et de préférence entre 2,5 et 3,5.

Selon encore une autre caractéristique de l'invention, le(s) monomère(s) polyhydroxybenzène(s) R et ledit solvant aqueux W sont utilisés pour ladite réaction selon un rapport massique R/W inclusivement compris entre 0,07 et 1, et de préférence entre 0,4 et 0,7.

Selon un autre aspect de l'invention, la composition peut être avantageusement dépourvue de tout polymère amphiphile, de tout polyélectrolyte et/ou de tout composé hydrophobe. Ainsi, ladite composition gélifiée peut être notamment dépourvue de copolymère amphiphile à blocs oxyde d'éthylène-oxyde de propylène-oxyde d'éthylène et de composé hydrophobe de type triméthylnezène (TMB), la composition étant de ce fait dépourvue de micelles.

Selon une autre caractéristique de l'invention, ledit solvant aqueux W peut être de l'eau, et avantageusement l'on n'utilise pas de formaldéhyde pour ladite réaction.

Parmi les polymères précurseurs utilisables dans l'invention, on peut ainsi citer ceux résultant de la polycondensation d'au moins un monomère du type polyhydroxybenzène et de l'hexaméthylène tétramine. Cette réaction de polymérisation peut impliquer plus de deux monomères distincts, les monomères additionnels étant du type polyhydroxybenzène ou non. Les monomères polyhydroxybenzènes utilisables sont des di- ou des tri-hydroxybenzènes, et avantageusement le résorcinol (1,3-di hydroxybenzène) ou le mélange du résorcinol avec un autre composé choisi parmi le catéchol, l'hydroquinone, le phloroglucinol.

Une composition carbonée pyrolysée selon l'invention est obtenue par séchage puis pyrolyse de ladite composition gélifiée et forme un carbone poreux monolithique de surface spécifique supérieure à 550 m²/g et de volume poreux inférieur à 0,50 cm³/g, et cette composition pyrolysée est telle que ledit volume poreux est microporeux (avec par définition des diamètres de pores inférieurs à 2 nm) selon une fraction volumique égale ou supérieure à 70 % et que ladite surface spécifique est microporeuse (avec par définition des diamètres de pores également inférieurs à 2 nm) selon une fraction surfacique égale ou supérieure à 80 % et de préférence égale ou supérieure à 90 %, voire à 95 %, ledit volume poreux et ladite surface spécifique étant mesurés par manométrie d'adsorption d'azote à 77 K.

Avantageusement, ladite surface spécifique peut être égale ou supérieure à 580 m²/g, et ledit volume poreux peut être inférieur ou égal à 0,40 cm³/g. Ledit carbone poreux présente de préférence un volume microporeux compris entre 0,15 cm³/g et 0,25 cm³/g.

On notera que cette structure essentiellement microporeuse des carbones poreux de l'invention est par définition caractérisée par des diamètres de pores inférieurs à 2 nm, contrairement aux structures mésoporeuses qui sont par définition caractérisées par des diamètres de pores inclusivement compris entre 2 nm et 50 nm.

Une électrode de carbone poreux selon l'invention est utilisable pour équiper une cellule de supercondensateur, et est telle que l'électrode comprend à titre de matière active ladite composition pyrolysée.

On notera que la microporosité joue un rôle important pour la formation de la double couche électrochimique dans une telle cellule, et que les carbones poreux majoritairement microporeux de l'invention permettent avantageusement de disposer d'une énergie spécifique et d'une capacité élevées pour ces électrodes de supercondensateur.

Un procédé de préparation selon l'invention de ladite composition gélifiée comprend :
a) une réaction de polycondensation dans un solvant aqueux W tel que de l'eau, de(s) monomère(s) polyhydroxybenzène(s) R et de l'hexaméthylène tétramine H de préférence sans utiliser du formaldéhyde, pour l'obtention d'un polycondensat en milieu aqueux, puis
b) une gélification par chauffage dudit polycondensat, pour l'obtention de la composition gélifiée.

On notera que ce procédé de l'invention n'utilise avantageusement pas de catalyseur pour la mise en oeuvre de l'étape a).

Selon un mode particulier de réalisation de l'invention, l'étape a) comprend :
a1) une dissolution du ou des monomère(s) polyhydroxybenzène(s) R dans une première partie dudit solvant aqueux W, pour l'obtention d'une première solution aqueuse,
a2) une dissolution par chauffage de l'hexaméthylène tétramine H dans une seconde partie dudit solvant aqueux, pour l'obtention d'une seconde solution aqueuse, et
a3) une mise en contact de la première solution aqueuse avec la seconde solution aqueuse, jusqu'à l'obtention d'une troisième solution aqueuse homogène comprenant ledit polycondensat.

Un procédé de préparation selon l'invention de ladite composition carbonée pyrolysée comprend :
a) une réaction de polycondensation dans un solvant aqueux W tel que de l'eau, de(s) monomère(s) polyhydroxybenzène(s) R et de l'hexaméthylène tétramine H de préférence sans utiliser du formaldéhyde, pour l'obtention d'un polycondensat en milieu aqueux,
b) une gélification par chauffage dudit polycondensat pour l'obtention de la composition gélifiée,
c) un séchage de ladite composition gélifiée, puis
d) une pyrolyse de la composition gélifiée et séchée obtenue en c) typiquement à plus de 600° C, pour l'obtention dudit carbone poreux.

Avantageusement ce procédé peut comprendre en outre, suite à l'étape d), une étape e) d'activation dudit carbone poreux comprenant une imprégnation dudit carbone poreux par un acide fort soufré, de préférence par un acide qui se présente sous la forme d'une solution de pH inférieur à 1 et qui est choisi parmi l'acide sulfurique, l'oléum, l'acide chlorosulfonique et l'acide fluorosuifonique, comme décrit dans le document EP-B1-2 455 356 au nom de la Demanderesse avec par exemple utilisation d'acide sulfurique (H₂SO₄ 18 M) pour ce procédé de l'invention,

D'autres caractéristiques, avantages et détails de la présente invention ressortiront à la lecture de la description suivante de plusieurs exemples de réalisation de l'invention, donnés à titre illustratif et non limitatif.

### Exemples de préparation selon l'invention de compositions gélifiées et pyrolysées, en comparaison d'un exemple « témoin » de telles compositions:

On a préparé deux compositions polymériques aqueuses gélifiées G1 et G2 selon l'invention correspondant aux exemples 1 et 2 ci-après, toutes deux issues de la polycondensation de résorcinol R (de chez Acros Organics, pur à 98 %) et d'hexaméthylène tétramine H (fournie par Sigma-Aldrich), et une composition polymérique aqueuse gélifiée « témoin » GO issue de la polycondensation du même résorcinol R mais avec du formaldéhyde F (de chez Acros Organics, pur à 37 %) à la place de l'hexaméthylène tétramine.

Le tableau 1 ci-après détaille les formulations utilisées pour ces trois compositions G1, G2 et G0, avec :
- R/H : rapport molaire résorcinol/hexaméthylène tétramine,
- R/W : rapport massique résorcinal/eau, et
- % H: fraction massique d'hexaméthylène tétramine dans chaque composition gélifiée G1, G2.

**Tableau 1 :**

| | **G1** | **G2** | **G0** |
|---|---|---|---|
| Résorcinol R | 175,21 g | 175,21 g | 175,21 g |
| Hexaméthylène tétramine H | 74,36 g | 74,36 g | - |
| Formaldéhyde F | - | - | 258,30 g |
| Eau distillée | 350,42 g | 292,02 g | 311,20 g |
| R/H | 3 | 3 | - |
| R/W | 0,5 | 0,6 | 0,4 |
| %H | 12,39 | 13,73 | - |

### Préparation des compositions gélifiées G1, G2, G0 et des compositions pyrolysées C1, C2, C0 qui en sont issues :

Lors d'une première étape, on a d'abord solubilisé le résorcinol dans la moitié de l'eau distillée sous agitation magnétique. En parallèle, on a solubilisé l'hexaméthylène tétramine pour les compositions G1 et G2 dans la moitié d'eau restante à l'aide d'un réacteur plongé dans un bain d'huile entre 40° C et 80° C. Après dissolution complète de l'hexaméthylène tétramine en vue de préparer G1 et G2, on a ajouté le mélange eau-résorcinol jusqu'à l'obtention d'une solution homogène (pour préparer la composition G0, on a utilisé le formaldéhyde F à la place de l'hexaméthylène tétramine H).

Lors d'une seconde étape, on a versé cette solution de polycondensat dans des moules de 2 mm d'épaisseur en acier recouvert de Téflon® puis on l'a gélifiée pendant 24 heures à 90° C. On a ensuite séché les gels organiques ainsi formés à 85° C et 85 % d'humidité pendant 6 heures. On a ensuite obtenu par pyrolyse à 800° C sous azote les compositions carbonées C1, C2 et C0 respectivement issues de G1, G2 et G0, sous forme de carbones poreux monolithiques, On a usiné les monolithes plans obtenus à épaisseur fixe de 0,7 mm puis on les a caractérisés.

Lors d'une troisième étape optionnelle, on a activé le carbone poreux C1 ainsi obtenu à l'aide d'un traitement à l'acide sulfurique (H₂SO₄, 18M) tel que décrit dans le document EP-B1-2 455 356 précité.

### Caractérisation de chaque composition pyrolysée C1, C2, C0 :

On a caractérisé chaque composition C1, C2, C0 préparée en mettant en oeuvre ces première et seconde étapes de polycondensation et de gélification, séchage et pyrolyse en mesurant la densité de chaque carbone poreux C1, C2, C0 par le rapport masse/volume du monolithe. On a obtenu les résultats présentés au tableau 2 ci-après par manométrie d'adsorption d'azote à 77 K sur un appareil ASAP 2020 de chez Micromeritics, à savoir les valeurs ainsi mesurées de surfaces spécifiques respectivement totale, microporeuse et mésoporeuse et de volumes poreux respectivement total et microporeux.

**Tableau 2 :**

| | **C1** | **C2** | **C0** |
|---|---|---|---|
| Masse volumique (g.cm⁻³) | 0,89 | 0,96 | 0,68 |
| Surface spécifique (m².g⁻¹) | 600 | 589 | 800 |
| | 558 microporeux (soit 93 %) | 498 microporeux (soit 84,6 %) | 460 microporeux (soit 57,5 %) |
| | 82 mésoporeux (soit 7 %) | 91 mésoporeux (soit 15,4 %) | 340 mésoporeux (soit 42,5 %) |
| Volume poreux (cm³.g⁻¹) | 0,30 | 0,35 | 1,16 |
| | 0,22 microporeux (soit 73,3 %) | 0,20 microporeux (soit 57,1 %) | 0,20 microporeux (soit 17,2 %) |

Les carbones poreux C1 et C2 selon l'invention issus des gels G1 et G2 à base d'hexamétylène tétramine selon une fraction massique relativement élevée (dans ces exemples comprise entre 10 et 14 %), présentent donc des surfaces spécifiques élevées (de l'ordre de 600 m².g⁻¹) avec des volumes poreux faibles (inférieurs à 0,40 cm³.g⁻¹), par rapport au volume poreux plus de trois fois supérieur qui caractérise le carbone « témoin » C0 issu du formaldéhyde.

De plus, la contribution microporeuse dans ces deux carbones C1 et C2 de invention est très élevée tant pour la surface spécifique (fraction microporeuse supérieure à 80 %, voire à 90 % pour le carbone préférentiel C1) que pour le volume poreux (fraction microporeuse supérieure à 50 %, voire à 70 % pour ce carbone C1), en comparaison de fractions microporeuses pour la surface spécifique et le volume poreux du carbone C0 qui sont respectivement inférieures à 60 % et à 20 %.

On notera que le carbone C0 présente une surface spécifique plus élevée que celles des carbones C1et C2 mais un volume poreux beaucoup plus élevé, ce qui implique que la quantité d'électrolyte pour remplir ce carbone C0 est plus grande que pour les carbones C1 et C2 de l'invention.

### Tests électrochimiques avec les carbones poreux C1 et C2 :

On a réalisé des électrodes E1 et E2 respectivement à partir des carbones poreux C1 et C2, Pour cela, on a mélangé avec de l'eau des liants, des charges conductrices, différents additifs et chaque carbone poreux selon la méthode décrite à l'exemple 1 du document FR-A1-2 985 598 au nom de la Demanderesse. On a enduit puis réticulé la formulation obtenue sur un collecteur métallique, On a mesuré la capacité des électrodes E1 et E2 par voie électrochimique en utilisant le dispositif et les tests suivants.

On a monté en série deux électrodes identiques isolées par un séparateur au sein d'une cellule de mesure de supercondensateur contenant un électrolyte aqueux (H₂SO₄, 1 M dans une première série d'essais, et LiNO₃, 5M dans une seconde série d'essais) et pilotée par un potentiostat/galvanostat « Bio-Logic VMP3 » via une interface à trois électrodes. La première électrode de carbone correspond à l'électrode de travail, la seconde constitue la contre-électrode et l'électrode de référence utilisée est au calomel.

On a mesuré les capacités des électrodes en soumettant le système à des cycles de charge-décharge à un courant constant 1 de 0,126 A/g pour l'électrode de travail (électrode positive). Le potentiel évoluant de façon linéaire avec la charge véhiculée, on a déduit la capacité de chaque électrode supercapacitive à partir des pentes p à la charge et à la décharge (C = 1/p). Les capacités spécifiques moyennes ainsi mesurées de chaque électrode E1, E2 sont visibles :
- au tableau 3, qui donne les performances de ces électrodes pour un supercondensateur dans un électrolyte à base de H₂SO₄ 1 M, et
- au tableau 4, pour les performances des électrodes d'un supercondensateur à électrolyte à base de LiNO₃ 5M, avant et après le post-traitement d'activation du carbone C1 lors de la troisième étape précitée.

**Tableau 3 :**

| Electrolyte H₂SO₄ 1 M | E1 | E2 |
|---|---|---|
| Capacité spécifique électrode positive (F/g) | 170 | 175 |
| Capacité spécifique électrode négative (F/g) | 250 | 270 |

**Tableau 4 :**

| Electrode LiNO₃ 5M | C1 avant post-traitement | C1 après post-traitement |
|---|---|---|
| Capacité spécifique électrode positive (F/g) | 115 | 125 |
| Capacité spécifique électrode négative (F/g) | 105 | 150 |

Ces tableaux 3 et 4 montrent que les carbones poreux C1 et C2 de l'invention confèrent des performances électrochimiques élevées à des électrodes les incorporant au sein d'un supercondensateur à électrolyte aqueux acide ou basique, avec préférentiellement la mise en oeuvre d'un post-traitement d'imprégnation acide de ces carbones poreux selon l'invention qui permet d'améliorer encore la performance de ces électrodes les incorporant.

## Revendications

1. Composition polymérique aqueuse gélifiée apte à former par séchage puis pyrolyse un carbone poreux monolithique, la composition formant un gel chimique irréversible comprenant le produit d'une réaction de polycondensation dans un solvant aqueux W de monomère(s) polyhydroxybenzène(s) R choisis parmi les di- et tri-hydroxybenzènes et d'hexaméthylène tétramine H selon une fraction massique H/ (R+H+W) utilisée pour ladite réaction, **caractérisée en ce que** ladite fraction massique H/ (R+H+W) est inclusivement comprise entre 7 % et 15 %.

2. Composition gélifiée selon la revendication 1, **caractérisée en ce que** ladite fraction massique H/ (R+H+W) est inclusivement comprise entre 10 % et 14 % pour ladite réaction.

3. Composition gélifiée selon la revendication 1 ou 2, **caractérisée en ce que** le(s) monomère(s) polyhydroxybenzène(s) R et l'hexaméthylène tétramine H sont utilisés pour ladite réaction selon un rapport molaire R/H inclusivement compris entre 2 et 4.

4. Composition gélifiée selon une des revendications précédentes, **caractérisée en ce que** le(s) monomère(s) polyhydroxybenzène(s) R et ledit solvant aqueux W sont utilisés pour ladite réaction selon un rapport massique R/W inclusivement compris entre 0,07 et 1.

5. Composition gélifiée selon une des revendications précédentes, **caractérisée en ce que** la composition est dépourvue de tout polymère amphiphile et/ou de tout composé hydrophobe.

6. Composition gélifiée selon une des revendications précédentes, **caractérisée en ce que** ledit solvant aqueux W est de l'eau et **en ce que** l'on n'utilise pas du formaldéhyde pour ladite réaction.

7. Composition carbonée pyrolysée qui est obtenue par séchage puis pyrolyse d'une composition gélifiée selon une des revendications précédentes et qui forme un carbone poreux monolithique de surface spécifique supérieure à 550 m²/g et de volume poreux inférieur à 0,50 cm³/g, ladite surface spécifique étant microporeuse avec des diamètres de pores inférieurs à 2 nm selon une fraction surfacique égale ou supérieure à 80 %, ledit volume poreux et ladite surface spécifique étant mesurés par manométrie d'adsorption d'azote à 77 K, **caractérisée en ce que** ledit volume poreux est microporeux avec des diamètres de pores inférieurs à 2 nm selon une fraction volumique égale ou supérieure à 70 %.

8. Composition pyrolysée selon la revendication 7, **caractérisée en ce que** ladite surface spécifique est égale ou supérieure à 580 m²/g, et **en ce que** ledit volume poreux est inférieur ou égal à 0,40 cm³/g.

9. Composition pyrolysée selon la revendication 7 ou 8, **caractérisée en ce que** ledit carbone poreux présente un volume microporeux compris entre 0,15 cm³/g et 0,25 cm³/g.

10. Composition pyrolysée selon une des revendications 7 à 9, **caractérisée en ce que** ladite surface spécifique est microporeuse selon une fraction surfacique égale ou supérieure à 90 %.

11. Electrode de carbone poreux utilisable pour équiper une cellule de supercondensateur, **caractérisée en ce que** l'électrode comprend à titre de matière active une composition pyrolysée selon une des revendications 7 à 10.

12. Procédé de préparation d'une composition gélifiée selon une des revendications 1 à 6, **caractérisé en ce que** le procédé comprend :
a) une réaction de polycondensation dans un solvant aqueux W tel que de l'eau, de(s) monomère(s) polyhydroxybenzène(s) R et de l'hexaméthylène tétramine H de préférence sans utiliser du formaldéhyde, pour l'obtention d'un polycondensat en milieu aqueux, puis
b) une gélification par chauffage dudit polycondensat, pour l'obtention de la composition gélifiée.

13. Procédé de préparation d'une composition gélifiée selon la revendication 12, **caractérisé en ce que** l'étape a) comprend :
a1) une dissolution du ou des monomère(s) polyhydroxybenzène(s) R dans une première partie dudit solvant aqueux W, pour l'obtention d'une première solution aqueuse,
a2) une dissolution par chauffage de l'hexaméthylène tétramine H dans une seconde partie dudit solvant aqueux, pour l'obtention d'une seconde solution aqueuse, et
a3) une mise en contact de la première solution aqueuse avec la seconde solution aqueuse, jusqu'à l'obtention d'une troisième solution aqueuse homogène comprenant ledit polycondensat.

14. Procédé de préparation d'une composition carbonée pyrolysée selon une des revendications 7 à 10, **caractérisé en ce que** le procédé comprend :
a) une réaction de polycondensation dans un solvant aqueux W tel que de l'eau, de(s) monomère(s) polyhydroxybenzène(s) R et de l'hexaméthylène tétramine H de préférence sans utiliser du formaldéhyde, pour l'obtention d'un polycondensat en milieu aqueux,
b) une gélification par chauffage dudit polycondensat pour l'obtention de la composition gélifiée,
c) un séchage de ladite composition gélifiée, puis
d) une pyrolyse de la composition gélifiée et séchée obtenue en c), pour l'obtention dudit carbone poreux.

15. Procédé de préparation d'une composition carbonée pyrolysée selon la revendication 14, **caractérisé en ce que** le procédé comprend en outre, suite à l'étape d), une étape e) d'activation dudit carbone poreux comprenant une imprégnation dudit carbone poreux par un acide fort soufré qui se présente sous la forme d'une solution de pH inférieur à 1 et qui est choisi parmi l'acide sulfurique, l'oléum, l'acide chlorosulfonique et l'acide fluorosulfonique.

## Patentansprüche

1. Gelierte wässrige Polymerzusammensetzung, welche fähig ist, durch Trocknung und anschließende Pyrolyse einen porösen monolithischen Kohlenstoff zu bilden, wobei die Zusammensetzung ein irreversibles chemisches Gel bildet, welches das Produkt einer Polykondensationsreaktion in einem wässrigen Lösungsmittel W von Polyhydroxybenzolmonomer(en) R, ausgewählt aus Di- und Trihydroxybenzolen, und Hexamethylentetramin H gemäß einem Massenverhältnis H/ (R+H+W), welches für die genannte Reaktion verwendet wird, umfasst,
**dadurch gekennzeichnet, dass**
dieses Massenverhältnis H/ (R+H+W) zwischen einschließlich 7 % und 15 % liegt.

2. Gelierte Zusammensetzung gemäß Anspruch 1,
**dadurch gekennzeichnet, dass**
das genannte Massenverhältnis H / (R+H+W) zwischen einschließlich 10% und 14 % für die genannte Reaktion liegt.

3. Gelierte Zusammensetzung gemäß den Ansprüchen 1 oder 2,
**dadurch gekennzeichnet, dass**
das oder die Polyhydroxybenzolmonomer(e) R und das Hexamethylentetramin H für die genannte Reaktion gemäß einem Molverhältnis R/H, das zwischen einschließlich 2 und 4 liegt, verwendet werden.

4. Gelierte Zusammensetzung gemäß einem der vorhergehenden Ansprüche,
**dadurch gekennzeichnet, dass**
das oder die Polyhydroxybenzolmonomer(e) R und das genannte wässrige Lösungsmittel W für die genannte Reaktion gemäß einem Massenverhältnis R/W zwischen einschließlich 0.07 und 1 verwendet werden.

5. Gelierte Zusammensetzung gemäß einem der vorhergehenden Ansprüche,
**dadurch gekennzeichnet, dass**
die Zusammensetzung frei von allen amphiphilen Polymeren und/oder von allen hydrophoben Verbindungen ist.

6. Gelierte Zusammensetzung gemäß einem der vorhergehenden Ansprüche,
**dadurch gekennzeichnet, dass**
das genannte wässrige Lösungsmittel W Wasser ist und man kein Formaldehyd für die genannte Reaktion verwendet.

7. Pyrolysierte kohlenstoffhaltige Zusammensetzung, welche durch Trocknung und anschließende Pyrolyse einer gelierten Zusammensetzung gemäß einem der vorhergehenden Ansprüche erhalten ist und welche einen porösen monolithischen Kohlenstoff mit einer spezifischen Oberfläche oberhalb von 550 m²/g und einem Porenvolumen von weniger als 0.50 cm³/g bildet, wobei die spezifische Oberfläche mikroporös ist mit Porendurchmessern von weniger als 2 nm entsprechend einer Oberflächenfraktion gleich oder höher als 80%, wobei dieses Porenvolumen und diese spezifische Oberfläche durch manometrische Messung der Stickstoffadsorption auf 77 K bestimmt wurde,
**dadurch gekennzeichnet, dass**
das genannte poröse Volumen mikroporös mit Porendurchmessern von weniger als 2 nm entsprechend einer Volumenfraktion von gleich oder mehr als 70 % ist.

8. Pyrolysierte Zusammensetzung gemäß Anspruch 7,
**dadurch gekennzeichnet, dass**
die genannte spezifische Oberfläche gleich oder größer als 580 m²/g beträgt, und dass das genannte poröse Volumen kleiner oder gleich 0,40 cm³/g ist.

9. Pyrolysierte Zusammensetzung gemäß den Ansprüchen 7 oder 8,
**dadurch gekennzeichnet, dass**
der genannte poröse Kohlenstoff ein mikroporöses Volumen zwischen 0,15 cm³/g und 0,25 cm³/g aufweist.

10. Pyrolysierte Zusammensetzung gemäß einem der Ansprüche 7 bis 9,
**dadurch gekennzeichnet, dass**
die genannte spezifische Oberfläche mikroporös gemäß einer Oberflächenfraktion von gleich oder mehr als 90 % ist.

11. Poröse Kohlenstoffelektrode, welche verwendbar ist zur Ausrüstung einer Superkondensatorzelle,
**dadurch gekennzeichnet, dass**
die Elektrode als aktives Material eine pyrolysierte Zusammensetzung gemäß einem der Ansprüche 7 bis 10 umfasst.

12. Verfahren zur Herstellung einer gelierten Zusammensetzung gemäß einem der Ansprüche 1 bis 6,
**dadurch gekennzeichnet, dass**
das Verfahren umfasst:
a) eine Polykondensationsreaktion in einem wässrigen Lösungsmittel W wie z.B. Wasser, von einem oder mehreren Polyhydroxybenzolmonomer(en) R und Hexamethylentetramin H, vorzugsweise ohne Verwendung von Formaldehyd, zur Herstellung eines Polykondensats in wässrigem Milieu, dann
b) Gelieren durch Erhitzen dieses Polykondensats zur Herstellung der gelierten Zusammensetzung.

13. Verfahren zur Herstellung einer gelierten Zusammensetzung gemäß Anspruch 12,
**dadurch gekennzeichnet, dass**
der Schritt a) umfasst:
a1) das Auflösen des oder der Polyhydroxybenzolmonomere R in einem ersten Teil des genannten wässrigen Lösungsmittels W zum Herstellen einer ersten wässrigen Lösung,
a2) das Auflösen von Hexamethylentetramin H durch Erwärmen in einem zweiten Teil des genannten wässrigen Lösungsmittels zur Herstellung einer zweiten wässrigen Lösung, und
a3) ein Inkontaktbringen der ersten wässrigen Lösung mit der zweiten wässrigen Lösung bis eine dritte homogene wässrige Lösung enthaltend das genannte Polykondensat erhalten ist.

14. Verfahren zur Herstellung einer pyrolysierten kohlenstoffhaltigen Zusammensetzung gemäß einem der Ansprüche 7 bis 10,
**dadurch gekennzeichnet, dass**
das Verfahren umfasst:
a) eine Polykondensationsreaktion in einem wässrigen Lösungsmittel W wie z.B. Wasser zwischen einem oder mehreren Polyhydroxybenzolmonomer(en) R und dem Hexamethylentetramin H vorzugsweise ohne Verwendung von Formaldehyd zur Herstellung eines Polykondensats in wässrigem Milieu,
b) ein Gelieren durch Erhitzen des genannten Polykondensats zur Herstellung der gelierten Zusammensetzung,
c) eine Trocknung der genannten gelierten Zusammensetzung, dann
d) eine Pyrolyse der gelierten und getrockneten Zusammensetzung, welche in Schritt c) erhalten wurde, unter Erhalt des genannten porösen Kohlenstoffs.

15. Verfahren zur Herstellung einer pyrolysierten kohlenstoffhaltigen Zusammensetzung gemäß Anspruch 14,
**dadurch gekennzeichnet, dass**
das Verfahren zusätzlich nachfolgend zu Schritt d) einen Schritt e) der Aktivierung des genannten porösen Kohlenstoffs umfasst, welcher ein Imprägnieren des genannten porösen Kohlenstoffs mit einer konzentrierten Schwefelsäure umfasst, die in Form einer Lösung mit einem pH niedriger als 1 vorliegt und die ausgewählt ist aus Schwefelsäure, Oleum, Chlorschwefelsäure und Fluorschwefelsäure.

## Claims

1. A gelled aqueous polymer composition capable of forming, by drying and then pyrolysis, a monolithic porous carbon, the composition forming an irreversible chemical gel comprising the product of a polycondensation reaction in an aqueous solvent W of polyhydroxybenzene(s) monomer(s) R selected from di- and trihydroxybenzenes and of hexamethylenetetramine H according to an H/(R+H+W) fraction by weight used for said reaction, **characterized in that** said H/(R+H+W) fraction by weight is between 7% and 15% inclusive.

2. The gelled composition as claimed in claim 1, **characterized in that** said H/(R+H+W) fraction by weight is between 10% and 14% inclusive for said reaction.

3. The gelled composition as claimed in claim 1 or 2, **characterized in that** the polyhydroxybenzene(s) monomer(s) R and the hexamethylenetetramine H are used for said reaction according to an R/H molar ratio of between 2 and 4 inclusive.

4. The gelled composition as claimed in one of the preceding claims, **characterized in that** the poly-hydroxybenzene(s) monomer(s) R and said aqueous solvent W are used for said reaction according to an R/W ratio by weight of between 0.07 and 1 inclusive.

5. The gelled composition as claimed in one of the preceding claims, **characterized in that** the composition is devoid of any amphiphilic polymer and/or of any hydrophobic compound.

6. The gelled composition as claimed in one of the preceding claims, **characterized in that** said aqueous solvent W is water and **in that** formaldehyde is not used for said reaction.

7. A pyrolyzed carbon-based composition which is obtained by drying and then pyrolysis of a gelled composition as claimed in one of the preceding claims and which forms a monolithic porous carbon with a specific surface of greater than 550 m²/g and with a pore volume of less than 0.50 cm³/g, said specific surface being microporous with diameters of pores of less than 2 nm according to a fraction by surface equal to or greater than 80%, said pore volume and said specific surface being measured by nitrogen adsorption manometry at 77K, **characterized in that** said pore volume is microporous with diameters of pores of less than 2 nm according to a fraction by volume of greater than 70%.

8. The pyrolyzed composition as claimed in claim 7, **characterized in that** said specific surface is equal to or greater than 580 m²/g, and **in that** said pore volume is less than or equal to 0.40 cm³/g.

9. The pyrolyzed composition as claimed in claim 7 or 8, **characterized in that** said porous carbon exhibits a micropore volume of between 0.15 cm³/g and 0.25 cm³/g.

10. The pyrolyzed composition as claimed in one of claims 7 to 9, **characterized in that** said specific surface is microporous according to a fraction by surface equal to or greater than 90%.

11. A porous carbon electrode usable to equip a supercapacitor cell, **characterized in that** the electrode comprises, as active material, a pyrolyzed composition as claimed in one of claims 7 to 10.

12. A process for the preparation of a gelled composition as claimed in one of claims 1 to 6, **characterized in that** the process comprises:
a) a polycondensation reaction in an aqueous solvent W, such as water, of the polyhydroxybenzene(s) monomer(s) R and of the hexamethylenetetramine H preferably without using formaldehyde, preferably without using formaldehyde, in order to obtain a polycondensate in an aqueous medium, then
b) a gelling by heating said polycondensate, in order to obtain the gelled composition.

13. The process for the preparation of a gelled composition as claimed in claim 12, **characterized in that** step a) comprises:
a1) a dissolution of the polyhydroxybenzene(s) monomer(s) R in a first portion of said aqueous solvent W, in order to obtain a first aqueous solution,
a2) a dissolution by heating of the hexamethylenetetramine H in a second portion of said aqueous solvent, in order to obtain a second aqueous solution, and
a3) bringing the first aqueous solution into contact with the second aqueous solution, until a third homogeneous aqueous solution comprising said polycondensate is obtained.

14. A process for the preparation of a pyrolyzed carbon-based composition as claimed in one of claims 7 to 10, **characterized in that** the process comprises:
a) a polycondensation reaction in an aqueous solvent W, such as water, of the polyhydroxybenzene(s) monomer(s) R and of the hexamethylenetetramine H, preferably without using formaldehyde, in order to obtain a polycondensate in an aqueous medium,
b) a gelling by heating said polycondensate in order to obtain the gelled composition,
c) a drying of said gelled composition, then
d) a pyrolysis of the gelled and dried composition obtained in c), in order to obtain said porous carbon.

15. The process for the preparation of a pyrolyzed carbon-based composition as claimed in claim 14, **characterized in that** the process additionally comprises, after step d), a step e) of activation of said porous carbon comprising an impregnation of said porous carbon with a sulfur-comprising strong acid, preferably with an acid which is provided in the form of a solution with a pH of less than 1 and which is chosen from sulfuric acid, oleum, chlorosulfonic acid and fluorosulfonic acid.
